# EUROPÄISCHE PATENTSCHRIFT

(11) **EP 1 344 330 B1**
(45) Veröffentlichungstag und Bekanntmachung des Hinweises auf die Patenterteilung: **13.04.2005**
(21) Anmeldenummer: 01990346.7
(22) Anmeldetag: 21.12.2001
(51) Int. Cl.: H04B 7/005, H04Q 7/34, H04B 17/00

(54) **VERFAHREN ZUR VERMEIDUNG VON DURCH FEHLERHAFTE MOBILSTATIONEN HERVORGERUFENEN STÖRUNGEN IN ZELLULAREN CDMA-FUNKNETZEN**
METHOD FOR AVOIDING INTERFERENCES IN CELLULAR CDMA RADIO NETWORKS CAUSED BY DEFECTIVE MOBILE STATIONS
PROCEDE POUR EVITER DES PERTURBATIONS DANS DES RESEAUX DE TELEPHONIE MOBILE A ACCES MULTIPLE PAR REPARTITION DE CODE (CDMA) CELLULAIRES, CAUSEES PAR DES STATIONS MOBILES DEFECTUEUSES

(30) Priorität: 21.12.2000 DE 10064351
(43) Veröffentlichungstag der Anmeldung: 17.09.2003
(73) Patentinhaber: T-Mobile Deutschland GmbH, 53227 Bonn (DE)
(72) Erfinder: JUNG, Christof, 54311 Trierweiler/Sirzenich (DE); KREUZ, Wolfgang, 53123 Bonn (DE)
(74) Vertreter: Riebling, Peter, Dr.-Ing.
(86) Internationale Anmeldenummer: PCT/DE2001/004831
(87) Internationale Veröffentlichungsnummer: WO 2002/051030

(56) Entgegenhaltungen:
- EP-A- 0 880 239
- US-A- 5 873 027
- US-A- 6 069 881
- US-A- 6 128 507

## Beschreibung

Die Erfindung betrifft ein Verfahren zur Vermeidung von durch fehlerhafte Mobilstationen hervorgerufenen Störungen in zellularen CDMA-Funknetzen nach dem Oberbegriff des unabhängigen Patentanspruchs 1.

In neuerer Zeit gewinnen zunehmend zellulare Funksysteme an Bedeutung, die als Vielfach-Zugriffsverfahren sogenannte Codemultiplex oder Code-Teilungs-Techniken (CDMA: Code Division Multiple Access, W-CDMA, UMTS) anwenden. Bei dieser Vielfach-Zugriffs-Technik wird normalerweise für alle über die Luftschnittstelle zu realisierenden Verbindungen zwischen einer teilnehmerseitigen Mobilstation (Endgerät) und einer Basisstation des Funknetzes dieselbe Trägerfrequenz benutzt, und die individuelle Zuordnung des Teilnehmers zu dieser Trägerfrequenz erfolgt durch Faltung des vom Teilnehmer erzeugten Basisbandsignals mit einer individuellen Codefolge.

Gelangen an einen Empfänger der Basisstation gleichzeitig Signale mehrerer Gegenstationen (teilnehmerseitige Mobilstationen), so liegen diese Signale normalerweise alle auf derselben Trägerfrequenz. Die Demodulation eines empfangenen code-geteilten Signals besteht im wesentlichen In der Rück-Faltung des empfangenen Signals mittels der bei der Modulation verwendeten Codefolge. Dabei wirken die Signale aller anderen in der betreffenden Zelle befindlichen Teilnehmer für das Signal des zu demodulierenden, gewünschten Teilnehmers als Störsignale. Als Grundvoraussetzung für ein zufriedenstellendes Arbeiten des Demodulators müssen alle gleichzeitig an den Empfängereingang der Basisstation gelangenden Teilnehmersignale nahezu die gleiche Amplitude besitzen; ansonsten ist eine Demodulation durch eine Rückfaltung nicht möglich.

In einer Funkzelle ist die Pfaddämpfung zwischen den Mobilstationen und der Basisstation abhängig von der Entfernung zwischen Teilnehmer und Basisstation. Unterschiede in den Pfaddämpfungen zwischen am Zellrand befindlichen Teilnehmern und der Basisstation bzw. in der Nähe der Basisstation sendenden Teilnehmern und der Basisstation bis zu 80 dB sind der Normalfall.

Die Forderung nach gleicher Empfangsfeldstärke aller Mobilstationen am Eingang der Basisstation führt zwangsläufig zur Einführung einer entsprechenden Regelung der jeweiligen Sendeleistung der Mobilstationen. Nahe an der Basisstation befindliche Mobilstationen müssen um bis zu 83 dB in ihrer Sendeleistung herabgeregelt werden können. Die Sendeleistung der Mobilstationen wird laufend von der zugeordneten Basisstation überwacht. Die Mobilstation erhält über die Funkschnittstelle von der Basisstation bedarfsweise Befehle zur Leistungssteuerung, um ihre Leistung entsprechend anzupassen.

Im Gegensatz zu frequenz- oder zeitgeteilten Systemen (wie. FDMA: Frequency Division Multiple Access bzw. TDMA: Time Division Multiple Access), bei denen jeder Teilnehmer einen frequenz- oder zeitmäßig fest definierten Kanal auf der Luftschnittstelle belegt und somit normalerweise andere Teilnehmer nicht beeinträchtigen kann, wirkt bei CDMA-Systemen jeder Teilnehmer als Störer für alle anderen Teilnehmer in dieser Zelle. Der Teilnehmer, der den höchsten Empfangspegel an der Basisstation erzeugt, bestimmt in diesen Systemen die Größe der Funkzelle. Signale von Teilnehmern, die einen geringeren Empfangspegel an der Basis-Station erzeugen, werden nicht mehr ordnungsgemäß detektiert bzw. dekodiert.
Damit besteht die Gefahr, dass in CDMA-Systemen ein Teilnehmer mit einem Endgerät, das eine fehlerhafte oder gar keine Regelung der Sendeleistung besitzt, durch die Erzeugung einer extrem hohen Empfangsfeldstärke am Empfänger der Basisstation nahezu die gesamte Funkzelle blockiert. Alle Teilnehmer, die trotz maximaler abgegebener Sendeleistung eine niedrigere Empfangsfeldstärke an der Basisstation erzeugen, werden unterdrückt (call drops).

Die EP-A-0 880 239 beschreibt ein Verfahren zur Erfassung von fehlerhaften Mobilstation in CDMA-Mobilfunknetzen, bei dem in einer Überwachungseinrichtung eine von einer Mobiisiation eintreffende Ist-Empfangsleistung mit einer vorgegebenen Soll-Empfangsleistung verglichen wird und eine Unterbrechung der HF-Verbindung zwischen Basisstation und Mobilstation erfolgt, wenn die Ist-Empfangsleistung die Soll-Empfangsleistung überschreitet.
Ein ähnliches Verfahren ist in der US-A-6 128 507 offenbart.

Die US-A-6 069 881 offenbart ein Verfahren zur Erfassung von fehlerhaften Mobilstation in CDMA-Mobilfunknetzen, bei dem im Funknetz eine Überwachungseinrichtung vorgesehen ist, in der ein Zähler eingerichtet ist, mittels dem Befehle zur Leistungssteuerung der Mobilstation, die individuell für jede Mobilstation von der Basisstation zur Mobilstation gesendet werden, erfasst werden. Die Basisstation unterbricht die der entsprechenden Mobilstation zugeordnete HF-Verbindung, wenn der Wert des Zählers einen vorgegebenen Referenzwert überschreitet. Die bekannten Verfahren verhindern Störungen durch Endgeräte mit ausgefallener Leistungsregelung. Eine Erkennung von Endgeräten mit falsch implementierter HP-Leistungsregelung (z.B. zu langsamer Regelung) ist nicht möglich.

Die Aufgabe der Erfindung liegt darin, ein Verfahren vorzuschlagen, mit welchem nicht nur Störungen durch Endgeräte mit ausgefallener Leistungsregelung verhindert werden können, sondern auch eine Erkennung von Endgeräten mit falsch implementierter HF-Leistungsregelung (z.B. zu langsamer Regelung) möglich ist.

Diese Aufgabe wird durch die Merkmale des unabhängigen Patentanspruchs 1 gelöst.

Erfindungsgemäß ist dazu in der Überwachungseinrichtung ein zweiter Zähler implementiert, mittels dem die veranlassten Verbindungsunterbrechungen individuell für jede Mobilstation gezählt werden. Falls der Wert des zweiten Zählers einen vorgegebenen Referenzwert überschreitet, wird der Zugriff der Mobilstation auf das Funknetz vollständig gesperrt.

Vorteilhafte Ausgestaltungen und Weiterbildungen der Erfindung sind in den abhängigen Patentansprüchen angegeben.

In einer bevorzugten Ausführung der Erfindung wird der erste Zähler bei jedem Befehl der Basisstation an die Mobilstation, die Sendeleistung zu verringern, um einen Schritt erhöht, und bei jedem Befehl, die Sendeleistung zu erhöhen, um einen Schritt erniedrigt oder auf Null zurückgesetzt. Sobald der Wert des ersten Zählers einen vorgegebenen Referenzwert überschreitet, unterbricht die Basisstation die der entsprechenden Mobilstation zugeordnete HF-Verbindung.

Vor der Unterbrechung der Verbindung kann eine Benachrichtigung des Teilnehmers über den Grund der Unterbrechung erfolgen, die vorzugsweise in Form einer SMS-Kurznachricht übermittelt wird.

Für jede bestehende Funkverbindung zwischen der Mobilstation und der Basisstation ist ein eigener Zähler eingerichtet.

Als weitere Aktion kann eine Unterbrechung der HF-Verbindung zwischen Basisstation und Mobilstation vorgesehen sein, wenn die Ist-Empfangsleistung die Soll-Empfangsleistung überschreitet, vorzugsweise für einen längeren Zeitraum überschreitet. Andererseits kann vorgesehen sein, dass die Mobilstation für weitere Zugriffe auf das Funknetz ganz gesperrt wird, wenn die Ist-Empfangsleistung die Soll-Empfangsleistung mehrere Male in Folge überschreitet. Vorzugsweise wird der Vergleich jeweils während der ersten uplink-Verbindung zwischen der Mobilstation und einer Basisstation des Funknetzes durchgeführt.

Falls der Wert des zweiten Zählers einen vorgegebenen Referenzwert überschreitet, wird der Zugriff der Mobilstation auf das Funknetz vollständig gesperrt, wobei vor der Sperre der Mobilstation eine Benachrichtigung des Teilnehmers über den Grund der Sperre erfolgt. Auch hier kann die Benachrichtigung in Form einer Kurznachricht (SMS) erfolgen.
Vorteilhaft wird die Sperre der Mobilstation mit deren Internationaler Mobilgerätekennung IMEI verknüpft.

Ferner kann es vorgesehen sein, dass die Überwachungseinrichtung in den Basisstationen oder aber in den Basisstationssteuerungen des Funknetzes eingerichtet ist.

Ausführungsbeispiele der Erfindung werden nachfolgend anhand von Zeichnungsfiguren näher erläutert. Aus den Zeichnungen und ihrer Beschreibung ergeben sich weitere Merkmale, Vorteile und Anwendungen der Erfindung.
Es zeigt:
- Figur 1:: schematisch und in vereinfachter Darstellung eine mögliche Einrichtung zur Durchführung der Verfahren;
- Figur 2:: Ein Ablaufdiagramm einer ersten möglichen Ausbildung des Verfahrens;
- Figur 3:: Ein Ablaufdiagramm einer zweiten möglichen Ausbildung des Verfahrens.

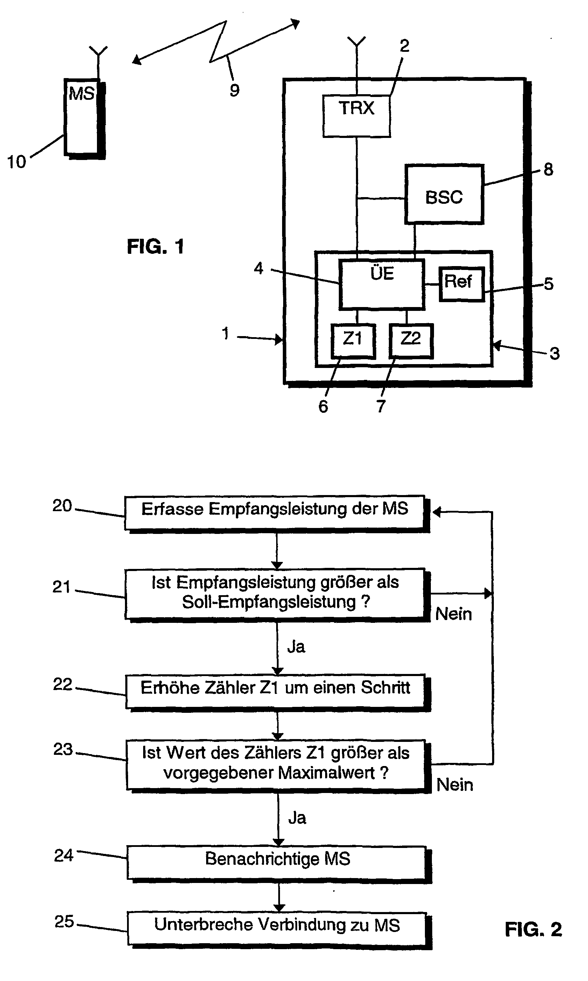

Im Beispiel gemäss Figur 1 umfasst das betrachtete CDMA-Funknetz mindestens eine Basisstation 1 und eine Mobilstation 10, die über eine Luftschnittstelle 9 untereinander Funksignale austauschen können.
Die Basisstation 1 umfasst eine Sende-/Empfangseinheit 2 und wird von einer Basisstationssteuerung 8 gesteuert, die innerhalb der Basisstation 1 oder auch extern angeordnet sein kann.

In der Basisstation 1 (oder aber in der Basisstationssteuerung 8) ist eine Überwachungseinrichtung 3 eingerichtet, die im wesentlichen eine Auswertelogik 4 umfasst, einen Referenzwertspeicher 5 zur Speicherung einer vorgegeben Soll-Empfangsleistung (Referenz-Empfangsleistung) sowie einen ersten und einen zweiten Zähler 6 bzw. 7. Die Überwachungseinrichtung 3 ist mit der Sende-/Empfangseinrichtung 2 und der Basisstationssteuerung 8 verbunden und kann (Steuer-)signale mit diesen Einrichtungen austauschen.

In einer ersten Ausbildung der Erfindung wird in der Überwachungseinrichtung 3 die am Empfänger 2 der Basisstation 1 eintreffende Empfangsleistung der Mobilstation 10 ausgewertet.

Normalerweise erzeugt die Mobilstation 10 beim Einbuchen in das Funknetz einen uplink-Empfangspegel am Empfängereingang 2 der Basisstation 1, der etwa dem zu erwartenden Soll-Eingangspegel entspricht. Ursache für dieses Verhalten ist, dass die Mobilstation 10 im Bereitschaftszustand den Pilot-Träger der Basisstation 1 überwacht und ihre Ausgangsleistung entsprechend der dadurch angenommenen Pfaddämpfung einstellt. Diese Art der Leistungssteuerung wird auch als Open loop Power Control bezeichnet.
Ist die Leistungssteuerung der Mobilstation 10 defekt, so wird sich diese unter Umständen mit einem viel zu hohen Uplink-Signalpegel bei der Basisstation 1 anmelden. Überschreitet der uplink-Signalpegel für eine Teilnehmerverbindung mehrfach hintereinander einen vom Netzbetreiber vorzugebenden Soll-Schwellwert, so ist davon auszugehen, dass die Leistungsregelung der betreffenden Mobilstation 10 defekt ist.

Figur 2 verdeutlicht dieses Verfahren. Die Überwachungseinrichtung 3 überwacht den Signalpegel der Mobilstation 10 am Eingang der Empfängers 2 der Basisstation 1 (Schritt 20). Es wird ein regelmäßig ein Vergleich zwischen dem von der Mobilstation 10 empfangenen Eingangssignalpegel und einem vorgegebenen Soll-Signalpegel vorgenommen (Schritt 21), der in dem Referenzwertspeicher 5 abgelegt ist. Ist der Eingangssignalpegel kleiner als der vorgegebene Soll-Signalpegel, so erfolgt ein regulärere Verbindungsaufbau zur Mobilstation 10.
Ist dagegen der Eingangssignalpegel größer als der vorgegebene Soll-Signalpegel so wir der Wert des Zählers 6 (Z1) um einen Schritt erhöht (Schritt 22).
Der Wert des Zählers 6 wird nun mit einem vorgegebenen Referenzwert verglichen (Schritt 23). Ist der Wert des Zählers 6 kleiner als der Referenzwert, so wird mit dem Verbindungsaufbau fortgefahren.
Ist der Wert des Zählers 6 dagegen größer als der vorgegebene Referenzwert, so wird die Verbindung zwischen Mobilstation 10 und Basisstation 1 unterbrochen und die Mobilstation zuvor z.B. per SMS über den Grund der Verbindungsunterbrechung benachrichtigt (Schritte 25 und 24).

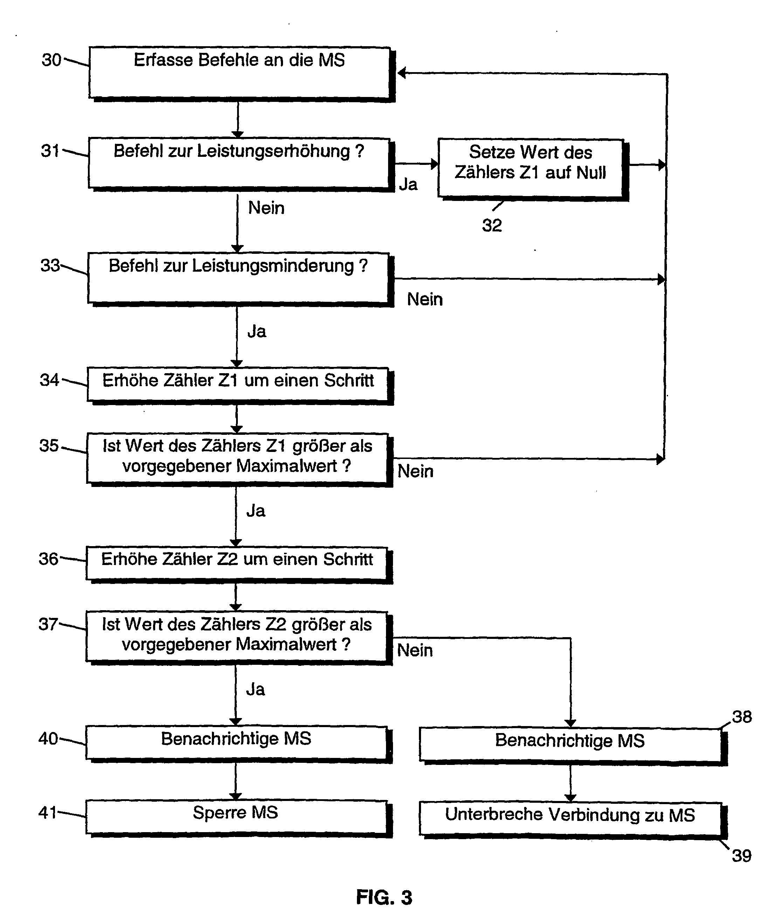

Eine zweite Ausbildung der Erfindung wird anhand der Figuren 1 und Figur 3 beschrieben. Hierbei erfasst die Überwachungseinrichtung 3 in einer bestehenden Funkverbindung zwischen Mobilstation 10 und Basisstation 1 die von der Basisstationssteuerung 8 kommenden Befehle zur Leistungssteuerung an die Mobilstation 10 (Schritt 30). Der Zähler 6 (Z1) wird dazu verwendet, die Befehle zu Leistungssteuerung an die Mobilstation, die von der Basisstation zur Mobilstation gesendet werden zu zählen und zu bewerten.

Erfasst die Überwachungseinrichtung 3 einen Befehl, der eine Aufforderung zur Erhöhung der Sendeleistung der Mobilstation beinhaltet (Schritt 31), wird der Wert des Zählers 6 auf Null zurückgesetzt (Schritt 32).
Erfasst die Überwachungseinrichtung einen Befehl an die Mobilstation 10 zur Leistungsminderung (Schritt 33), so wird der Wert des Zählers 6 um einen Schritt erhöht (Schritt 34).

Es wird nun verglichen, ob der Wert des Zählers 6 einen vorgegebenen Referenzwert überschreitet (Schritt 35). Der Referenzwert ist im Referenzwertspeicher 5 abgelegt.
Ist dies nicht der Fall, so wird mit Schritt 30 fortgefahren.
Überschreitet der Wert des Zählers 6 den Referenzwert, so wird der Wert eines zweiten Zählers 7 um einen Schritt erhöht (Schritt 36). Dieser Zähler 2 zählt die Anzahl der Referenzwertüberschreitungen des ersten Zählers 6, was bisher erfolgten Verbindungsunterbrechungen für die betreffende Mobilstation 10 gleichzusetzen ist. Es wird nun verglichen, ob der Wert des zweiten Zählers 7 einen vorgegebenen Referenzwert überschreitet (Schritt 37), der ebenfalls im Referenzwertspeicher 5 abgespeichert ist.
Ist dies nicht der Fall, so wird mit Schritt 38 fortgefahren, worauf die der entsprechenden Mobilstation 10 zugeordnete HF-Verbindung unterbrochen wird (Schritt 39). Zusätzlich kann vor der Unterbrechung der Funkverbindung eine entsprechende Benachrichtigung des Teilnehmers über den Grund der Unterbrechung erfolgen (Schritt 38).

Überschreitet der Wert des zweiten Zählers 7 den vorgegebenen Referenzwert, so wird der Zugriff der Mobilstation 10 zum Funknetz vollständig gesperrt (Schritt 41), da davon ausgegangen werden kann, dass die Leistungsregelung der Mobilstation defekt ist. Zuvor kann die Mobilstation über die vollständige Sperrung benachrichtigt werden (Schritt 40).

Sinnvoll kann eine Kombination beider Auswerteverfahren sein. Das erstgenannte Verfahren verhindert Störungen durch Endgeräte mit ausgefallener Leistungsregelung, während das zweitbeschriebene Verfahren auch die Erkennung von Endgeräten mit falsch implementierter HF-Leistungsregelung (z.B. zu langsamer Regelung) erkennen kann.

### Zeichnungslegende

- 1: Basisstation
- 2: Sender-/Empfänger
- 3: Überwachungseinrichtung
- 4: Logik
- 5: Referenzwertspeicher
- 6: erster Zähler (Z1)
- 7: zweiter Zähler (Z2)
- 8: Basisstationssteuerung
- 9: Luftschnittstelle
- 10: Mobilstation

- 20: Erfasse Empfangsleistung
- 21: Vergleich Empfangsleistung
- 22: Erhöhe Zähler Z1
- 23: Vergleich Zähler Z1
- 24: Benachrichtige MS
- 25: Unterbreche Verbindung

- 30: Erfasse Befehle
- 31: Befehl zur Leistungserhöhung
- 32: Setze Z1 auf Null
- 33: Befehl zur Leistungsminderung
- 34: Erhöhe Zähler Z1
- 35: Vergleich Zähler Z1
- 36: Erhöhe Zähler Z2
- 37: Vergleich Zähler Z2
- 38: Benachrichtige MS
- 39: Unterbreche Verbindung
- 40: Benachrichtige MS
- 41: Sperre MS

## Patentansprüche

1. Verfahren zur Vermeidung von durch fehlerhafte Endgeräte hervorgerufenen Störungen in zellularen CDMA-Funknetzen, wobei im Funknetz eine Überwachungseinrichtung (3) vorgesehen ist, in der mindestens ein Zähler (6) eingerichtet ist, der in der Lage ist, Befehle zur Leistungssteuerung der Mobilstation (10), die individuell für jede Mobilstation von der Basisstation zur Mobilstation gesendet werden, zu erfassen und in Abhängigkeit davon vorgegebene Folgeaktionen einzuleiten, wobei die Basisstation die der entsprechenden Mobilstation (10) zugeordnete HF-Verbindung unterbricht, wenn der Wert des Zählers (6) einen vorgegebenen Referenzwert überschreitet,
**dadurch gekennzeichnet,**
**dass** in der Überwachungseinrichtung (3) ein zweiter Zähler (7) implementiert ist, mittels dem die veranlassten Verbindungsunterbrechungen individuell für jede Mobilstation gezählt werden, wobei der Zugriff der Mobilstation (10) auf das Funknetz vollständig gesperrt wird, wenn der Wert des zweiten Zählers (7) einen vorgegebenen Referenzwert überschreitet.

2. Verfahren nach Anspruch 1, **dadurch gekennzeichnet, dass** der Zähler (6) bei jedem Befehl der Basisstation (1) an die Mobilstation (10), die Sendeleistung zu verringern, um einen Schritt erhöht wird, und bei jedem Befehl, die Sendeleistung zu erhöhen, um einen Schritt erniedrigt oder auf Null zurückgesetzt wird.

3. Verfahren nach Anspruch 1 oder 2, **dadurch gekennzeichnet dass** vor der Unterbrechung der Verbindung eine Benachrichtigung der Mobilstation (10) über den Grund der Unterbrechung erfolgt.

4. Verfahren nach einem der vorhergehenden Ansprüche, **dadurch gekennzeichnet, dass** die Benachrichtigung in Form einer Kurznachricht SMS erfolgt.

5. Verfahren nach einem der vorhergehenden Ansprüche, **dadurch gekennzeichnet, dass** für jede bestehende Funkverbindung zwischen der Mobilstation (10) und der Basisstation (1) ein eigener Zähler (6) eingerichtet ist.

6. Verfahren nach einem der vorhergehenden Ansprüche, **dadurch gekennzeichnet, dass** die Übeswachungseinrichtung (3) eine von einer Mobilstation (10) eintreffende ist-Empfangsleistung mit einer vorgegebenen Soll-Empfangsleistung vergleicht und in Abhängigkeit des Ergebnisses des Vergleichs vorgegebene Folgeaktionen einleitet.

7. Verfahren nach einem der vorhergehenden Ansprüche, **dadurch gekennzeichnet, dass** als Folgeaktion die Unterbrechung der HF-Verbindung zwischen Basisstation (1) und Mobilstation (10) erfolgt, wenn die Ist-Empfangsteistung die Soll-Empfangsleistung überschreitet.

8. Verfahren nach einem der vorhergehenden Ansprüche, **dadurch gekennzeichnet, dass** als Folgeaktion die Mobilstation (10) für weitere Zugriffe auf das Funknetz gesperrt wird, wenn die Ist-Empfangsleistung die Soll-Empfangsleistung mehrere Male in Folge überschreitet.

9. Verfahren nach einem der vorhergehenden Ansprüche, **dadurch gekennzeichnet, dass** der Vergleich jeweils während der ersten uplink-Verbindung zwischen der Mobilstation (10) und einer Basisstation (1) des Funknetzes durchgeführt wird.

10. Verfahren nach einem der vorhergehenden Ansprüche, **dadurch gekennzeichnet, dass** vor der Sperre der Mobilstation (10) eine Benachrichtigung des Teilnehmers über den Grund der Sperre erfolgt.

11. Verfahren nach einem der vorhergehenden Ansprüche, **dadurch gekennzeichnet, dass** die Benachrichtigung in Form einer Kurznachricht SMS erfolgt.

12. Verfahren nach einem der vorhergehenden Ansprüche, **dadurch gekennzeichnet, dass** die Sperre der Mobilstation (10) mit deren Internationaler Mobilgerätekennung IMEI verknüpft wird.

13. Verfahren nach einem der vorhergehenden Ansprüche, **dadurch gekennzeichnet, dass** die Überwachungseinrichtung (3) in den Basisstationen (1) des Funknetzes eingerichtet ist.

14. Verfahren nach einem der vorhergehenden Ansprüche, **dadurch gekennzeichnet, dass** die Überwachungseinrichtung (3) in den Basisstationssteuerungen (8) des Funknetzes eingerichtet ist.

## Claims

1. Method for avoiding interference caused by defective terminals in cellular CDMA radio networks, wherein in the radio network is provided a monitor (3) in which is installed at least one counter (6) which is capable of detecting commands for power control of the mobile station (10), which are transmitted individually for each mobile station from the base station to the mobile station, and of initiating consequent actions predetermined as a function thereof, wherein the base station interrupts the HF link assigned to the corresponding mobile station (10) if the value of the counter (6) exceeds a predetermined reference value, **characterised in that** in the monitor (3) is implemented a second counter (7) by means of which the link interruptions caused are counted individually for each mobile station, wherein access of the mobile station (10) to the radio network is completely blocked if the value of the second counter (7) exceeds a predetermined reference value.

2. Method according to claim 1, **characterised in that**, with each command from the base station (1) to the mobile station (10) to reduce the transmitting power, the counter (6) is raised by one step, and with each command to increase the transmitting power it is lowered by one step or reset to zero.

3. Method according to claim 1 or 2, **characterised in that**, before interruption of the link, notification of the mobile station (10) concerning the reason for the interruption is effected.

4. Method according to one of the preceding claims, **characterised in that** notification is effected in the form of a short message SMS.

5. Method according to one of the preceding claims, **characterised in that** for each existing radio link between the mobile station (10) and the base station (1) a separate counter (6) is installed.

6. Method according to one of the preceding claims, **characterised in that** the monitor (3) compares an actual received power arriving from a mobile station (10) with a predetermined nominal received power and initiates predetermined consequent actions as a function of the result of the comparison.

7. Method according to one of the preceding claims, **characterised in that**, as a consequent action, interruption of the HF link between base station (1) and mobile station (10) is effected if the actual received power exceeds the nominal received power.

8. Method according to one of the preceding claims, **characterised in that**, as a consequent action, the mobile station (10) is blocked for further access to the radio network if the actual received power exceeds the nominal received power several times in succession.

9. Method according to one of the preceding claims, **characterised in that** the comparison is made in each case during the first uplink between the mobile station (10) and a base station (1) of the radio network.

10. Method according to one of the preceding claims, **characterised in that**, before blocking of the mobile station (10), notification of the subscriber concerning the reason for blocking is effected.

11. Method according to one of the preceding claims, **characterised in that** notification is effected in the form of a short message SMS.

12. Method according to one of the preceding claims, **characterised in that** blocking of the mobile station (10) is linked to its international mobile equipment identity IMEI.

13. Method according to one of the preceding claims, **characterised in that** the monitor (3) is installed in the base stations (1) of the radio network.

14. Method according to one of the preceding claims, **characterised in that** the monitor (3) is installed in the base station controls (8) of the radio network.

## Revendications

1. Procédé pour éviter les perturbations causées par des stations mobiles défectueuses dans des réseaux radio cellulaires CDMA (à accès multiple à répartition par codage), selon lequel il est prévu dans le réseau radio un dispositif de surveillance (3) dans lequel est installé au moins un compteur (6) qui est en mesure de détecter des ordres pour la commande de puissance de la station mobile (10) qui sont envoyés par la station de base à la station mobile individuellement pour chaque station mobile et de déclencher en fonction de ces ordres des réactions consécutives prédéfinies, et la station de base interrompt la liaison HF associée à la station mobile correspondante (10) si la valeur du compteur (6) dépasse une valeur de référence prédéfinie,
**caractérisé en ce qu'**on met en oeuvre dans le dispositif de surveillance (3) un second compteur (7) à l'aide duquel les interruptions de liaison provoquées sont comptées individuellement pour chaque station mobile, l'accès de la station mobile (10) au réseau radio étant complètement bloqué si la valeur du second compteur (7) dépasse une valeur de référence prédéfinie.

2. Procédé selon la revendication 1, **caractérisé en ce que** le compteur (6), à chaque fois que la station de base (1) ordonne à la station mobile (10) de réduire la puissance d'émission, augmente d'un pas, et à chaque fois que l'ordre est donné d'augmenter la puissance d'émission, diminue d'un pas ou est remis à zéro.

3. Procédé selon la revendication 1 ou 2, **caractérisé en ce qu'**avant l'interruption de la liaison, la raison de l'interruption est notifiée à la station mobile (10).

4. Procédé selon l'une des revendications précédentes, **caractérisé en ce que** cette notification se fait sous la forme d'un message court SMS.

5. Procédé selon l'une des revendications précédentes, **caractérisé en ce que** pour chaque liaison radio existante entre la station mobile (10) et la station de base (1), un compteur individuel (6) est installé.

6. Procédé selon l'une des revendications précédentes, **caractérisé en ce que** le dispositif de surveillance (3) compare une puissance de réception réelle arrivant d'une station mobile (10) à une puissance de réception théorique prédéfinie et, en fonction du résultat de la comparaison, déclenche des réactions consécutives prédéfinies.

7. Procédé selon l'une des revendications précédentes, **caractérisé en ce que** comme réaction consécutive, la liaison HF entre la station de base (1) et la station mobile (10) est interrompue si la puissance de réception réelle dépasse la puissance de réception théorique.

8. Procédé selon l'une des revendications précédentes, **caractérisé en ce que** comme réaction consécutive, d'autres accès de la station mobile (10) au réseau radio sont bloqués si la puissance de réception réelle dépasse plusieurs fois de suite la puissance de réception théorique.

9. Procédé selon l'une des revendications précédentes, **caractérisé en ce que** la comparaison est effectuée à chaque fois pendant la première liaison montante entre la station mobile (10) et une station de base (1) du réseau radio.

10. Procédé selon l'une des revendications précédentes, **caractérisé en ce qu'**avant le blocage de la station mobile (10), la raison du blocage est notifiée à l'abonné.

11. Procédé selon l'une des revendications précédentes, **caractérisé en ce que** cette notification se fait sous la forme d'un message court SMS.

12. Procédé selon l'une des revendications précédentes, **caractérisé en ce que** le blocage de la station mobile (10) est combiné avec l'identification internationale de mobile IMEI de celle-ci.

13. Procédé selon l'une des revendications précédentes, **caractérisé en ce que** le dispositif de surveillance (3) est installé dans les stations de base (1) du réseau radio.

14. Procédé selon l'une des revendications précédentes, **caractérisé en ce que** le dispositif de surveillance (3) est installé dans les commandes de station de base (8) du réseau radio.
